# EUROPÄISCHE PATENTANMELDUNG

(11) **EP 4 418 160 A1**
(43) Veröffentlichungstag der Anmeldung: **21.08.2024**
(21) Anmeldenummer: 23157229.8
(22) Anmeldetag: 17.02.2023
(51) Int. Cl.: G06F 30/17, G06F 30/25, G06F 30/28, G01P 1/00, B23P 5/00, G06F 30/15, G06F 111/10, G06F 119/02, G06F 119/04

(54) **VERFAHREN ZUM SIMULIEREN VON PARTIKELEINSCHLÄGEN**

(71) Anmelder: MTU Aero Engines AG, 80995 München (DE)
(72) Erfinder: HÖRMANN, Julia, München (DE); FRISCHBIER, Jörg, München (DE); HACKENBERG, Hans-Peter, München (DE); FISCHERSWORRING-BUNK, Andreas, München (DE)
(74) Vertreter: König Szynka Tilmann von Renesse Patentanwälte Partnerschaft mbB München

(57) **Zusammenfassung**

Die vorliegende Erfindung betrifft ein computerimplementiertes Verfahren zum Simulieren von Partikeleinschlägen in einem Gaskanal (6) eines Flugtriebwerks (1), umfassend die Schritte: i) Vorsehen (41)eines strukturmechanischen Modells (11) von zumindest einem Abschnitt (6.1) des Gaskanals (6), wobei das Modell (11) strukturmechanisch modellierte Schaufelblätter (25) umfasst; ii) Platzieren (42) eines Partikels (30) in dem Gaskanal (6) des Modells (11); iii) Bewegen (43) des Partikels (30) mit einem Geschwindigkeitsvektor V, welcher zuvor in einer CFD-Simulation in einem CFD-Modell (10) von zumindest einem Abschnitt (6.1) des Gaskanals (6) für ein den Gaskanal (6) durchströmendes Fluid ermittelt wurde; iv) Erfassen (44) eines Aufpralls (76), wenn also das bewegte Partikel (30) auf eines der strukturmechanisch modellierten Schaufelblätter (25) trifft.

## Beschreibung

### Technisches Gebiet

Die vorliegende Erfindung betrifft ein computerimplementiertes Verfahren zum Simulieren von Partikeleinschlägen in einem Gaskanal eines Flugtriebwerks.

### Stand der Technik

Im Betrieb eines Flugtriebwerks wird im Verdichter angesaugte Luft komprimiert, bevor diese in der Brennkammer mit hinzugemischtem Treibstoff verbrannt wird. Das entstehende Heißgas wird in der nachgelagerten Turbine expandiert und dabei anteilig in kinetische Energie zur Vortriebserzeugung umgesetzt. Im Einzelnen können sowohl der Verdichter als auch die Turbine dabei jeweils mehrstufig aufgebaut sein, wobei eine jeweilige Stufe ein Leit- und ein Laufgitter aufweisen kann, also einen Leit- und einen Laufschaufelkranz.

Über die Betriebsdauer eines Triebwerks kann es durch im Gaskanal geführte Partikel zu Beschädigungen kommen, insbesondere können harte Kleinstpartikel kritisch sein, bspw. für schnelllaufende Turbinenschaufeln (z. B. eines Niederdruckturbinenmoduls). Solche im Gaskanal geführten Objekte bzw. im Folgenden generisch "Partikel" können einerseits von außen in das Triebwerk gelangen, also bspw. bei Start oder Landung durch den Verdichter angesaugt werden. Dies wird als Fremdkörperschaden bezeichnet (*Foreign Object Damage,* FOD). Andererseits können die Partikel auch aus dem Triebwerk selbst stammen, etwa als sich lösende Fragmente von über die Benutzungsdauer degradierenden Schutzschichten oder ähnlichem, was als BOMD oder DOD bezeichnet wird (*Bill Of Material Damage,* BOMD / *Domestic Object Damage,* DOD).

Unabhängig davon, auf welche Art bzw. Partikel ein etwaiger Schaden zurückgeht, können Untersuchungen an gelaufenen Triebwerken nur mit großem Aufwand im Zuge einer Revision vorgenommen werden. Dies erschwert die Auswertung generell, insbesondere ist kaum eine Untersuchung von systematischen Zusammenhängen anhand statistischer Betrachtungen möglich.

### Darstellung der Erfindung

Der vorliegenden Erfindung das technische Problem zugrunde, ein vorteilhaftes Verfahren anzugeben.

Dies wird erfindungsgemäß mit dem Verfahren nach Anspruch 1 gelöst, nämlich einem computerimplementierten Verfahren zum Simulieren von Partikeleinschlägen. Dieses basiert auf einer Kombination aus einer CFD-Simulation (*Computational Fluid Dynamics,* CFD) eines den Gaskanal durchströmenden Fluids mit einer strukturmechanischen Simulation von im Gaskanal angeordneten Schaufelblättern (eines Leit- und/oder Laufgitters). Im Einzelnen wird dabei ein strukturmechanisches Modell von zumindest einem Abschnitt des Gaskanals mit mehreren Schaufelblättern darin erstellt und wird in diesem ein Partikel platziert (ii). Das Partikel wird dann durch den modellierten Gaskanal bewegt (iii), und es wird erfasst, ob das Partikel auf eines der Schaufelblätter trifft, es also zu einem Aufprall kommt (iv). Dabei wird dem Partikel in Schritt iii) ein Geschwindigkeitsvektor vorgegeben, der zuvor in der CFD-Simulation für das den Gaskanal durchströmende Fluid ermittelt wurde.

Damit wird einerseits eine Verknüpfung zwischen Fluidströmung und Partikelbewegung geschaffen, dessen Bewegung und etwaiger Aufprall lassen sich im strukturmechanischen Modell untersuchen. Andererseits kann der Rechenaufwand damit aber auch beherrschbar gehalten werden, was eine größere Zahl an Untersuchungen/Simulationen und damit statistische Betrachtungen erlauben kann. Das Partikel lässt sich bspw. an unterschiedlichen Stellen des strukturmechanischen Modells platzieren (insbesondere bezogen auf Umlauf- und Radialrichtung, aber auch axial) und durch das Modell verfolgen, sodass bspw. hinsichtlich der Einschläge (Aufpralle) besonders gefährdete Schaufelblätter bzw. Bereiche davon (oder auch andere Teile im Gaskanal) ermittelt werden können. Diese lassen sich dann bspw. bereits herstellungsseitig entsprechend optimieren (z. B. Schutzbeschichtung, strukturmechanische Verstärkung bzw. Spannungsentlastung) oder aber bspw. auch bei der Definition von Revisionsintervallen und Austauschzyklen berücksichtigen.

Bevorzugte Ausgestaltungen finden sich in den abhängigen Ansprüchen und der gesamten Offenbarung, wobei bei der Darstellung der Merkmale nicht immer im Einzelnen zwischen den unterschiedlichen Anspruchskategorien unterschieden wird. Wird bspw. ein Verfahren zum Simulieren eines Bauteils beschrieben, ist dies zugleich immer auch als Offenbarung eines Verfahrens zum Entwerfen eines Bauteils zu verstehen, bei dem dieses entsprechend simuliert wird, sowie auch als entsprechendes Herstellungsverfahren etc. Die CFD-Simulation kann im Sinn eies Verfahrensschritts vor der strukturmechanischen Simulation vorgenommen werden, es können aber andererseits die Ergebnisse der CFD-Simulation bereits vorliegen und im Zuge des vorliegenden Verfahrens lediglich eingelesen werden (in Schritt iii).

Wie nachstehend im Detail diskutiert, kann das Simulieren von Partikeleinschlägen insbesondere auch beim Entwerfen/Designen eines Bauteils Anwendung finden, welches dann im Triebwerk im Strömungskanal angeordnet ist bzw. diesen begrenzt. Dabei kann es sich im Allgemeinen auch um eine sogenannte Gaskanalplatte handeln, die den Gaskanal nach radial innen oder außen begrenzt, insbesondere aber auch um eine Schaufel bzw. deren Schaufelblatt.

Bevorzugt bildet auch das strukturmechanische Modell den Gaskanal bzw. betrachteten Abschnitt davon mit einer Begrenzung nach radial innen und/oder außen ab, kann also das Partikel nicht nur auf eines der Schaufelblätter, sondern auch auf eine radial innere und/oder äußere Gaskanalwand treffen (die bspw. von einer Gaskanalplatte gebildet wird). Weder das CFD- noch das strukturmechanische Modell muss aber den gesamten Gaskanal abdecken (es wird jedenfalls ein "Abschnitt" davon modelliert).

Generell beziehen sich die Angaben "axial", "radial" und "umlaufend", sowie die zugehörigen Richtungen (Axialrichtung etc.) auf die Längsachse des Triebwerks, um welche bspw. im Betrieb dessen Laufgitter rotieren. In dem CFD- oder auch dem strukturmechanischen Modell kann die Längsachse bspw. eine Achse für eine Drehsymmetrie des Modells sein. Das Partikel wird in Schritt ii) an einer Stelle ("Startpunkt") im Gaskanal des strukturmechanischen Modells platziert, also zwischen dessen Schaufelblättern, etwa axial zwischen zwei aufeinanderfolgenden Gittern, aber im Allgemeinen bspw. auch innerhalb eines Gitters (und dabei auf einer Umlaufposition zwischen den Schaufelblättern).

Das CFD-Modell erstreckt sich über zumindest jenen Abschnitt des Gaskanals, in dem der Startpunkt liegt, bevorzugt über sämtliche Gitter des strukturmechanischen Modells. Prinzipiell liegt aus der CFD-Simulation ein Strömungsfeld vor, also an einer jeweiligen Stelle ein jeweiliger Geschwindigkeitsvektor. Ein "Geschwindigkeitsvektor" umfasst die Geschwindigkeit (Betrag) und ihre Richtung (Einheitsvektor), wobei dieses Vektorfeld mit einer der Auflösung (Vernetzung) des CFD-Modells entsprechenden Granularität vorliegen kann. In Schritt iii) kann dann bspw. der Geschwindigkeitsvektor an jener Stelle des Vektorfelds (also jenem Element des vernetzten CFD-Modells) genommen werden, der in seinen räumlichen Koordinaten dem Startpunkt entspricht, alternativ kann bspw. Mittelwert gebildet werden (siehe unten).

In dem strukturmechanischen Modell können dem Partikel, zusätzlich zu Startpunkt und Geschwindigkeit, bspw. auch eine Masse und/oder ein Volumen, insbesondere auch eine Form, vorgegeben werden. Mit Blick auf den Rechenaufwand kann ein einfach modelliertes Partikel bevorzugt sein, etwa mit einer Kugelform.

Generell erstreckt sich das strukturmechanische Modell axial bspw. über mindestens ein erstes Gitter, also ein Leit- oder Laufgitter, bevorzugt über eine Mehr- bzw. Vielzahl aufeinanderfolgende Gitter. Gemäß einer bevorzugten Ausführungsform wird ein erster Geschwindigkeitsvektor, mit dem das Partikel in das erste Gitter hineinbewegt wird, als Mittelwert eines an der Eintrittskante des ersten Gitters und eines an dessen Austrittskante jeweils in der CFD-Simulation ermittelten Geschwindigkeitsvektors gebildet. Als "Eintrittskante" wird hierbei jene Fläche betrachtet, die sich durch eine Rotation einer Vorderkante eines Schaufelblatts des ersten Gitters um die Längsachse ergibt, analog wird die "Austrittskante" durch entsprechende Rotation der Hinterkante des Schaufelblatts gebildet.

In einem einfachen Fall können die zur Mittelwertbildung herangezogenen Geschwindigkeitsvektoren bspw. auf derselben Umlauf- und Radialposition genommen werden, alternativ können aber auch Punkte (Elemente) zugrunde gelegt werden, die auf der gleichen Stromlinie liegen. Die Mittelung an sich kann den Geschwindigkeitsbetrag und/oder die Richtung betreffen, bevorzugt beides. Unabhängig von diesen Details kann die Mittelwertbildung dahingehend von Vorteil sein, dass sie einerseits eine gewisse Ablenkung der Strömung innerhalb des Gitters abbildet, andererseits aber der Rechenaufwand nicht maßgeblich erhöht wird, vergleiche die Anmerkungen eingangs.

Das erste Partikel wird mit einem ersten Geschwindigkeitsvektor in das erste Gitter hineinbewegt, egal ob dieser durch Mittelung bestimmt oder als diskreter Wert eintrittsseitig des ersten Gitters genommen wird. Austrittsseitig des ersten Gitters bewegt sich das Partikel dann mit einem ersten resultierenden Geschwindigkeitsvektor. Dieser kann bspw. gleich dem ersten Geschwindigkeitsvektor sein, wenn es innerhalb des ersten Gitters zu keinem Aufprall kommt, also das Partikel einfach hindurchfliegt. Kommt es jedoch zu einem Aufprall und wird dies über zumindest eine Richtungsänderung des Partikels berücksichtigt, kann der erste resultierende Geschwindigkeitsvektor eine andere Richtung haben (und gegebenenfalls auch einen anderen Betrag, siehe unten im Detail).

Unabhängig davon, wie der erste resultierende Geschwindigkeitsvektor im Detail zustande kommt, wird die Bewegung des Partikels zwischen dem ersten und zweiten Gitter in bevorzugter Ausgestaltung korrigiert. Dies erfolgt eintrittsseitig des zweiten Gitters mit einem zweiten Geschwindigkeitsvektor, der aus der CFD-Simulation genommen wird. Generell meint "eintrittsseitig" an der Eintrittskante des jeweiligen Gitters oder dieser vorgelagert (bis maximal zur Hinterkante des vorgelagerten Gitters), sowie entsprechend "austrittseitig" an der Hinterkante des jeweiligen Gitters bzw. dieser nachgelagert (bis maximal zur Eintrittskante des nachgelagerten Gitters).

Gemäß einer bevorzugten Ausführungsform erstreckt sich das strukturmechanische Modell über eine Vielzahl aufeinanderfolgende Gitter, bspw. mindestens 3, 4 oder 5 Gitter, z. B. abwechselnd aufeinanderfolgend jeweils Leit- und Laufgitter (mit möglichen Obergrenzen bei z. B. 30, 20 bzw. 15). Einem jeweiligen Gitter nachgelagert gibt es dabei einen jeweilig resultierenden Geschwindigkeitsvektor, also dem ersten Gitter nachgelagert den ersten resultierenden Geschwindigkeitsvektor (siehe oben), dem zweiten Gitter nachgelagert einen zweiten resultierenden Geschwindigkeitsvektor und so weiter. In bevorzugter Ausgestaltung wird ein jeweilig zwischen zwei Gittern resultierender Geschwindigkeitsvektor dort jeweils mit einem aus der CFD-Simulation genommenen Geschwindigkeitsvektor korrigiert, bspw. eintrittsseitig des nachgelagerten Gitters. Bei n Gittern kann es also bspw. mindestens oder auch genau (n-1) entsprechende Korrekturen geben, zwischen zwei Gittern jeweils mindestens oder auch genau eine Korrektur.

Gemäß einer bevorzugten Ausführungsform wird, wenn es zu einem Aufprall des Partikels kommt, dieses mit einem geänderten Geschwindigkeitsvektor weiter bewegt. Es wird also jedenfalls der Richtungsvektor der Bewegung geändert, im Allgemeinen kann der Geschwindigkeitsbetrag dabei auch unverändert bleiben. In einem einfachen Fall kann der resultierende Vektor dabei nach dem Reflexionsgesetz bestimmt werden (einfallende und ausgehende Bewegungstrajektorie liegen mit dem Einfallslot in einer Ebene, und Einfallswinkel = Ausfallswinkel).

Alternativ oder zusätzlich zum veränderten Geschwindigkeitsvektor kann das Partikel nach dem Aufprall auch mit einer geänderten Form weiter bewegt werden, kann ihm also eine geänderte Gestalt vorgegeben werden. Dies kann eine geänderte geometrische Form, z. B. oblater Rotationsellipsoid anstelle einer Kugel oder eines prolaten Rotationsellipsoids, und/oder ein verändertes Volumen meinen. Das nach dem Aufprall weiterbewegte Partikel kann bspw. ein kleineres Volumen als vor dem Aufprall haben. Das Partikel kann nach dem Aufprall einerseits noch immer als ein zusammenhängender Körper modelliert werden, es kann aber andererseits mit dem Aufprall auch in eine Mehrzahl Sub-Partikel aufgeteilt werden, auch dies ergibt eine "geänderte Form". Die Sub-Partikel können bspw. unabhängig voneinander jeweils für sich als "Partikel" in einer vorliegend offenbarten Weise durch das strukturmechanische Modell bewegt werden.

In bevorzugter Ausgestaltung wird der Aufprall quasiplastisch modelliert, verringert sich nämlich mit dem Aufprall der Geschwindigkeitsbetrag des Geschwindigkeitsvektors (zusätzlich zur Richtungsänderung). Ein Faktor, um den der Geschwindigkeitsbetrag reduziert wird, kann bevorzugt gesondert in einer strukturmechanischen Simulation ermittelt werden, mit welcher der Aufprall plastisch modelliert wird. Bevorzugt wird der Geschwindigkeitsbetrag beim Aufprall um einen Faktor verringert, der geschwindigkeits- und/oder winkelabhängig ist. Generell kann die quasiplastische Modellierung einerseits eine gute Annäherung ergeben, erhöht sie dabei aber andererseits den Rechenaufwand nicht maßgeblich.

Generell, auch unabhängig davon, in welcher Form oder mit welcher Geschwindigkeit das Partikel nach dem Aufprall weiterbewegt wird, wird es nach dem Aufprall weiter verfolgt bzw. betrachtet. Dabei kann es auf der Bewegungsstrecke des Partikels eine Mehrzahl Aufpralle geben, bspw. in den axial aufeinanderfolgenden Gittern und/oder auch dazwischen. Ferner kann es entlang der Bewegungsstrecke auch eine Mehrzahl Geschwindigkeitskorrekturen geben, z. B. unabhängig von einem Aufprall durch Abgleich mit der CFD-Simulation (siehe vorne) und/oder im Falle eines Aufpralls, vgl. die vorstehenden Absätze. Generell kann die Bewegungsstrecke dann bevorzugt über das gesamte strukturmechanische Modell reichen.

An sich kann bzw. können bereits der Aufprallort/die Aufprallorte, insbesondere bei einer Vielzahl Simulationen und damit Bewegungsstrecken (siehe unten), für das Entwerfen bzw. Herstellen einer optimierten Schaufel genutzt werden, können nämlich aufprallträchtige Bereiche besonders geschützt bzw. verstärkt werden, siehe unten. Gemäß einer bevorzugten Ausführungsform wird, wenn es zu einem Aufprall kommt, dessen Auswirkung auf das Bauteil, insbesondere die Bauteilschädigung, noch weiter modelliert bzw. beurteilt.

Dabei kann bzw. können ein oder mehrere Bauteil- und/oder Partikelparameter eingehen, insbesondere der Aufprallwinkel (z. B. steiler --> höherer Schädigungsgrad), die Aufprallgeschwindigkeit (z. B. höher --> größerer Schädigungsgrad), die Aufprallenergie (z. B. höher --> größerer Schädigungsgrad), die Bauteildicke (z. B. geringer --> größerer Schädigungsgrad), die Bauteilspannung (z. B. höher --> größerer Schädigungsgrad), das Bauteilmaterial (z. B. spröde oder duktil), das Partikelmaterial bzw. dessen Beschaffenheit (z. B. höhere Festigkeit --> größerer Schädigungsgrad) und/oder die Partikelgröße (größer --> höherer Schädigungsgrad) eingehen. Damit lassen sich dann etwaige Präventivmaßnahmen bei Design und Herstellung z. B. noch gezielter einsetzen, bspw. wenn besonders schnelle und damit kritische Partikel in einem bestimmten Bereich auftreffen, bspw. mit einer bestimmten Radialverteilung.

Gemäß einer bevorzugten Ausführungsform werden eine Vielzahl Partikel durch das strukturmechanische Modell bewegt, werden also die Schritte ii) bis iv) für eine Vielzahl Partikel vorgenommen. "Vielzahl" kann bspw. mindestens 10, 25, 50, 100, 200, 500 bzw. 1000 meinen (mit exemplarischen Obergrenzen bei 1E8, 1E7 bzw. 1E6). Die Partikel können auch unabhängig von einer bestimmten Anzahl bspw. jeweils eintrittsseitig des gleichen Gitters platziert werden (z. B. des ersten Gitters), können aber Radial- und/oder Umlaufposition variiert werden. Alternativ oder zusätzlich können die Partikel aber auch auf unterschiedlichen Axialpositionen platziert werden, bspw. zur Untersuchung von BOMD/DOD-Vorgängen.

Mit dem erfindungsgemäßen Vorgehen kann der Rechenaufwand auch beherrschbar gehalten werden, wenn eine Vielzahl Simulationen vorgenommen werden, lassen sich also Abhängigkeiten und Verteilungen untersuchen. Dementsprechend lassen sich für die einzelnen Bauteile im Gaskanal Häufigkeiten und Verteilungen von Aufprallen bestimmen, können also bspw. Monte-Carlo-Simulationen durchgeführt werden. Zusätzlich kann bspw. aus dem Geschwindigkeitsbetrag beim Aufprall auch ein Aufprallschweregrad ermittelt werden, ist also für die einzelnen Bauteile nicht nur ersichtlich, wo wie viele Partikel im Mittel einschlagen, sondern zusätzlich auch, wie heftig diese Einschläge sind. Dies gibt die eingetragene Energie wieder, die maßgeblich für die Schädigungswirkung sein kann. Damit lässt sich ein entsprechendes Bauteil, insbesondere Schaufelblatt, im Designprozess gezielt anpassen, bspw. strukturmechanisch verstärken und/oder spannungsmechanisch entlasten.

Gemäß einer bevorzugten Ausführungsform wird die Simulation mit einem gelaufenen Bauteil bzw. Triebwerk abgeglichen, wird also ein (erstes) Flugtriebwerk modelliert, von dem ein gebrauchtes Bauteil bzw. Modul vorhanden ist. Das Bauteil bzw. Modul wird dann auf Schädigungen, insbesondere Partikeleinschläge untersucht, es werden also in anderen Worten an einem realen Bauteil Aufpralle kartiert. Die Simulation, insbesondere einer Vielzahl Partikel, wird dann auf diese Kartierung hin angepasst. Mit den Simulationen können dabei insbesondere Bauteilparameter, wie bspw. Anzahl, Position und/oder Verteilung, nach der Maßgabe variiert werden, dass die simulierten Auswirkungen dann im Wesentlichen mit dem gelaufenen Bauteil bzw. Modul übereinstimmen. Letzteres kann bspw. dahingehen, dass die räumliche Verteilung der Aufpralle an die kartierte Verteilung angenähert wird, wobei bspw. zusätzlich eine modellierte Aufprallwirkung, insbesondere Schädigungsschwere Eingang finden kann.

Die durch diesen Abgleich ermittelten Partikelparameter können dann bevorzugt zur Modellierung eines zweiten Flugtriebwerks genutzt werden, also zum Vorhersagen von Bauteilschäden an einem zweiten Flugtriebwerk. Dieses kann sich insbesondere noch in einer Entwurfs- bzw. Erprobungsphase befinden. Das zweite Flugtriebwerk kann sich in seinen Betriebsbedingungen und/oder Geometrien von dem ersten Flugtriebwerk unterscheiden, bspw. eine Weiterentwicklung davon darstellen. Mit den im ersten Schritt anhand der gelaufenen Bauteile abgeglichen Partikelparametern lässt sich das zweite Flugtriebwerk dann bspw. in einer frühen Designphase dahingehend untersuchen, ob bzw. wo es schädigungsträchtige Bereiche gibt, für die dann in einer nachstehend geschilderten Weise besondere Vorkehrungen getroffen werden können. Das zweite Flugtriebwerk wird mit dem anhand des ersten Flugtriebwerks ermittelten Partikelparametern modelliert, diese werden gewissermaßen auf die Geometrie und Betriebsbedingungen des zweiten Flugtriebwerks übertragen. Letzteres meint, dass bspw. eine anhand des ersten Flugtriebwerks ermittelte Partikelverteilung mit den Betriebsbedingungen des zweiten Flugtriebwerks, also den aus der dafür vorgenommenen CFD-Simulation ermittelten Geschwindigkeiten, durch das strukturmechanische Modell des zweiten Flugtriebwerks bewegt wird (das strukturmechanische Modell bildet die neue Geometrie ab).

In bevorzugter Ausgestaltung können dabei an dem gebrauchten Bauteil Schäden dahingehend ausgewertet werden, dass zunächst eine zum jeweiligen Schaden gehörige Energie ermittelt wird. Es kann also bspw. anhand der Größe des Kraters, bspw. dessen Umfang und/oder Tiefe, die Aufprallenergie bestimmt werden, welche das Partikel gehabt haben muss. Ferner kann für diese Energie dann eine zugehörige Größe und/oder Masse des Artikels bestimmt werden. Diese Größen können dann als Partikelparameter wiederum Eingang in die Simulation eines neuen Triebwerks finden, also dem bzw. den Partikeln dort vorgegeben werden.

Die Erfindung betrifft auch ein Verfahren zum Entwerfen eines Bauteils für ein Flugtriebwerk, wobei dieses als Teil eines strukturmechanischen Modells gemäß Schritt i) modelliert und gemäß den Schritten klein ii) bis iv) dahingehend untersucht wird, ob/inwiefern es aufprallgefährdet ist. Manche Gitter und ihre Schaufelblätter können bspw. generell aufgrund ihrer Axialposition gefährdeter sein als andere Gitter, es kann aber bspw. auch innerhalb eines jeweiligen Gitters eine Verteilung geben, etwa radial ungleich verteilte Aufprallhäufigkeiten/-schweregrade.

Im Zuge des Designprozesses kann, wenn zumindest ein Bereich des Bauteils, insbesondere Schaufelblatts, als gefährdet identifiziert wird, zumindest in dem Bereich oder auch für das Bauteil insgesamt eine Gegenmaßnahme ergriffen werden. Hierbei meint "Gegenmaßnahme" ein Gestaltungsmerkmal des Bauteils/Schaufelblatts, welches im Falle eines Partikeleinschlags dessen Auswirkungen reduziert. Dies kann zum einen eine strukturmechanische Verstärkung sein, etwa eine gezielte Aufdickung (z. B. an der Vorderkante), also mehr Material, in zumindest dem Bereich des Schaufelblatts. Alternativ oder zusätzlich ist auch eine Mikrostrukturoptimierung möglich, bspw. durch Anpassung der Fertigungsprozesse oder der Materialzusammensetzung.

Alternativ oder zusätzlich kann ein Schaufelblatt bspw. auch so gestaltet werden, dass im Betrieb sein intrinsisches mechanisches Spannungsniveau reduziert ist, etwa indem sich im Falle eines Laufschaufelblatts Zentrifugal- und Gaskräfte zumindest teilweise ausgleichen. Dazu kann das Schaufelblatt z. B. mit einem Lean vorgesehen werden, also einer Neigung. Aufgrund des reduzierten mechanischen Spannungsniveaus ist das Bauteil bzw. Schaufelblatt dann weniger anfällig bei einem Partikeleinschlag, kann also der Umfang, in dem dieser zu einem Schädigungseintrag führt, reduziert werden. Ein weiteres Gestaltungsmerkmal kann eine Schutzbeschichtung sein, die als Gegenmaßnahme lokal in einem als kritisch identifizierten Bereich oder auch auf die gesamte Oberfläche des Bauteils aufgebracht werden kann. Ferner kann bspw. auch die Mikrostruktur des Bauteils zumindest bereichsweise dahingehend optimiert werden, dass eine höhere Bruchzähigkeit besteht.

Generell kann für das entworfene bzw. hergestellte Bauteil dann insbesondere in einem Bereich davon eine Gegenmaßnahme ergriffen worden sein, kann sich das Bauteil also bspw. dahingehend auszeichnen, dass sich ein Bereich davon entsprechend der ergriffenen Gegenmaßnahme von der Umgebung unterscheidet. Es kann also bspw. ein Teil der gaskanalzugewandten Oberfläche des Bauteils von der Maßnahme betroffen sein, ein anderer aber nicht.

Die Erfindung betrifft auch ein Verfahren zum Herstellen eines für ein Flugtriebwerk vorgesehenen Bauteils, insbesondere Schaufelblatts, wobei das Bauteil in einem vorstehend geschilderten Designprozess entworfen wird bzw. wurde. Bei der Herstellung kann dann eine in diesem Designprozess ermittelte Form des Bauteils bspw. durch eine materialabtragende Bearbeitung (Herausarbeiten aus Vollmaterial) und/oder eine materialauftragende Bearbeitung hergestellt werden, kann das Bauteil also bspw. generativ aufgebaut oder auch beschichtet werden.

Die Erfindung reichtet sich auch auf ein entsprechend entworfenes und/oder hergestelltes Bauteil, insbesondere Schaufel bzw. Schaufelblatt.

Ferner betrifft die Erfindung ein Verfahren zum Revidieren eines Bauteils, das im Gaskanal eines gelaufenen Flugtriebwerks im Einsatz war. Im Zuge der Revision kann das Bauteil, insbesondere seine gaskanalzugewandte Oberfläche, in Augenschein genommen werden, ferner kann dann bspw. eine Überarbeitung und/oder ein Austausch erfolgen. Dabei wurde oder wird eine Betriebsdauer, also bspw. die Betriebsstunden, nach welcher/welchen diese Revision erfolgt, auf der Grundlage eines Verfahrens ermittelt, mit dem wie vorstehend geschildert eine Vielzahl Partikel simuliert werden bzw. wurden. Aus den resultierenden Häufigkeits- bzw. Schweregradverteilungen der Aufpralle lässt sich ein geeigneter Zeitpunkt für die Revision bestimmen. Demensprechend wird die Betriebsdauer kürzer sein, wenn die Aufpralldichte/-schweregrade höher sind und im Vergleich länger sein, wenn diese geringer sind. Es können sich bspw. auch für baugleiche Flugtriebwerke unterschiedliche Betriebsdauern ergeben, nach denen revidiert wird, bspw. in Abhängigkeit von unterschiedlichen Einsatzbedingungen.

Die aus der Modellierung gewonnenen Daten können bspw. auch zum Bestimmen einer maximal zulässigen Betriebsdauer genutzt werden bzw. worden sein, nach welcher dann bspw. ein im Betrieb befindliches Bauteil revidiert und/oder ersetzt wird.

Die Erfindung betrifft ferner auch ein Computerprogrammprodukt, welches Befehle umfasst, die bei ihrer Ausführung auf einer Rechnereinheit diese veranlassen, ein eingangs geschildertes Simulationsverfahren durchzuführen. Ferner betrifft die Erfindung ein computerlesbares Medium, auf dem ein solches Computerprogrammprodukt gespeichert ist.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: in schematischer Darstellung ein Flugtriebwerk in einem schematischen Axial schnitt;
- Figur 2a, b: in schematischer Darstellung zwei Modelle zur Modellierung von Bauteilen in einem Gaskanal eines Flugtriebwerks;
- Figur 3: einige Schritte beim Simulieren von Partikeleinschlägen in einem Flussdiagramm;
- Figur 4: in schematischer Darstellung eine quasiplastische Modellierung eines Aufpralls;
- Figur 5: in schematischer Darstellung ein Schaufelblatt, das in einem Verfahren gemäß Figur 3 simuliert und in Konsequenz daraus bereichsweise mechanisch verstärkt wurde.

### Bevorzugte Ausführung der Erfindung

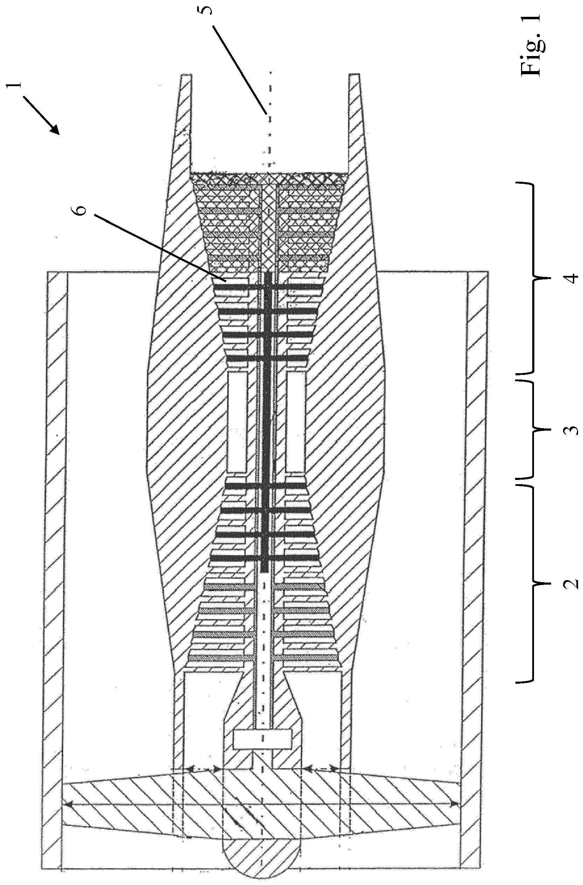

**Figur 1** zeigt ein Flugtriebwerk 1, vorliegend ein Mantelstromtriebwerk. Dieses gliedert sich funktional in Verdichter 2, Brennkammer 3 und Turbine 4. Im Betrieb wird angesaugte Luft im Verdichter 2 komprimiert, in der nachgelagerten Brennkammer 3 mit hinzugemischtem Treibstoff verbrannt und wird das Heißgas dann in der Turbine 4 expandiert. Sowohl der Verdichter 2 als auch die Turbine 4 sind jeweils mehrstufig aufgebaut, wobei eine jeweilige Stufe ein Leit- und ein Laufgitter umfasst. Letztere rotieren im Betrieb um die Längsachse 5.

Wie in der Beschreibungseinleitung im Detail dargelegt, können im Betrieb des Flugtriebwerks Partikel in dessen Gaskanal 6 gelangen, der hier exemplarisch im Bereich der Turbine 4 referenziert ist. Diese können ihren Ursprung extern (FOD) oder intern (BOMD/DOD) haben, im Ergebnis bewegen sie sich jedenfalls im Gaskanal 6 mit relativ hohen Geschwindigkeiten, was bei Aufprallen eine Beschädigungsgefahr birgt.

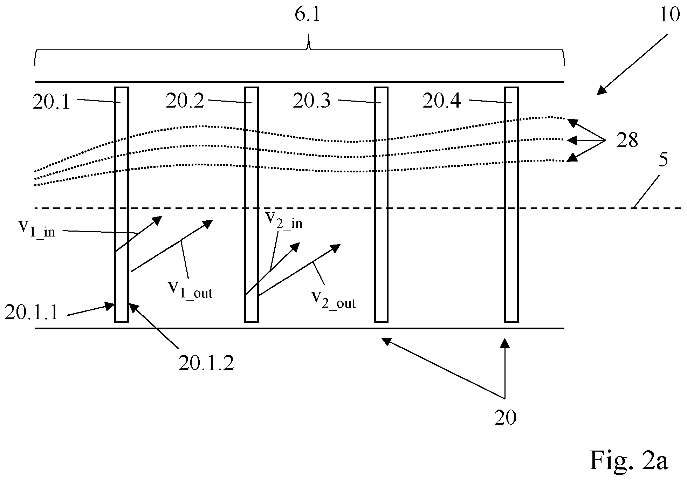

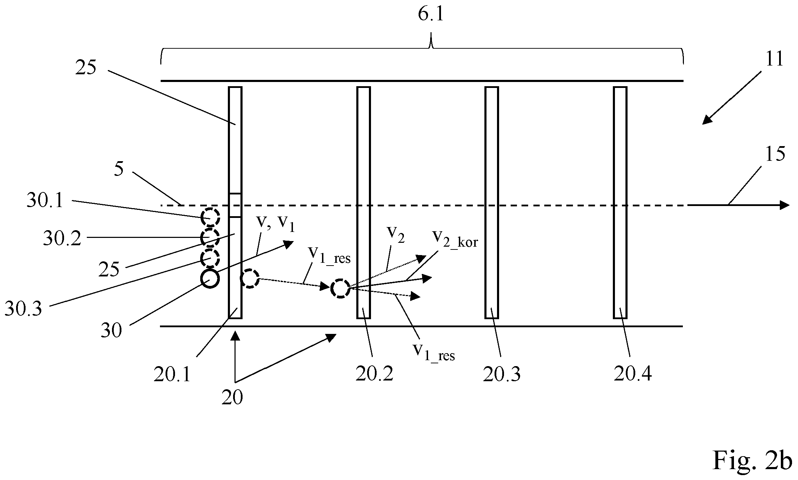

Die **Figuren 2a****,** **b** illustrieren in schematischer Darstellung jeweils einen Abschnitt 6.1 des Gaskanals 6, wobei dieser in Figur 2a in einem CFD-Modell 10 modelliert ist. Figur 2b zeigt hingegen ein strukturmechanisches Modell des Abschnitts 6.1 des Gaskanals 6. Dieses erstreckt sich in axialer Richtung 15 über mehrere Gitter 20, im vorliegenden Beispiel über ein erstes Gitter 20.1, zweites Gitter 20.2, drittes Gitter 20.3 und viertes Gitter 20.4. Für das erste Gitter 20.1 sind schematisch Schaufelblätter 25 eingezeichnet. Aufgrund der Ausnutzung von Symmetrien um die Längsachse 5 müssen sich die Modelle 10, 11, anders als hier schematisch dargestellt, selbstverständlich nicht tatsächlich jeweils vollständig umlaufend erstrecken.

In dem CFD-Modell 10 wird für die Gitter 20 eine an sich bekannte CFD-Simulation durchgeführt. In dem strukturmechanischen Modell 11 wird ein Partikel 30 platziert, das dann mit einem Geschwindigkeitsvektor v durch das Modell 11 bewegt wird, also durch den Abschnitt 6.1 des Gaskanals 6. Dabei wird dieser Geschwindigkeitsvektor v aus der CFD-Simulation genommen, er basiert also auf dem für das strömende Fluid ermittelten Geschwindigkeitsfeld.

Im Detail wird das Partikel 30 mit einem ersten Geschwindigkeitsvektor v₁ in das erste Gitter 20.1 hineinbewegt, wobei der erste Vektor v₁ bevorzugt durch Mittelung aus der CFD-Simulation gewonnen wird. Diese Mittelung betrifft einen Geschwindigkeitsvektor v_{1_in} an der Eintrittskante 20.1.1 des ersten Gitters 20.1 und einen Geschwindigkeitsvektor v_{1_out} an entsprechender Stelle an der Austrittskante 20.1.2 und ergibt einen ersten Geschwindigkeitsvektor v₁. Dieser wird in dem strukturmechanischen Modell 11 dem Partikel 30 eintrittsseitig des ersten Gitters 20.1 vorgegeben.

Dem ersten Gitter 20.1 nachgelagert hat das Partikel 30, strichliert dargestellt, einen ersten resultierenden Geschwindigkeitsvektor v_{1_res}, der vorliegend aufgrund eines Aufpralls vom ersten Geschwindigkeitsvektor v₁ abweicht. Bevor das Partikel 30 in das zweite Gitter 20.2 hineinbewegt wird, wird der erste resultierende Geschwindigkeitsvektor v_{1_res} korrigiert, und zwar mit einem zweiten Geschwindigkeitsvektor v₂. Dieser ergibt sich wiederum aus dem CFD-Modell 10, und zwar durch Mittelung von v_{2_in} und v _{2_out}. Im Detail können diese Geschwindigkeiten an der Eintritts- und Austrittskante bspw. auf einer gemeinsamen Stromlinie 28 liegen (hier der Übersichtlichkeit halber nur an anderer Stelle des Modells 10 gezeigt). Auf diese Weise kann das Partikel 30 sukzessive durch die Gitter 20 des Modells 11 bewegt werden, wobei sich der Bewegungsvektor durch Aufpralle und/oder die (wiederholte) Korrektur anhand des CFD-Modells 10 ergibt.

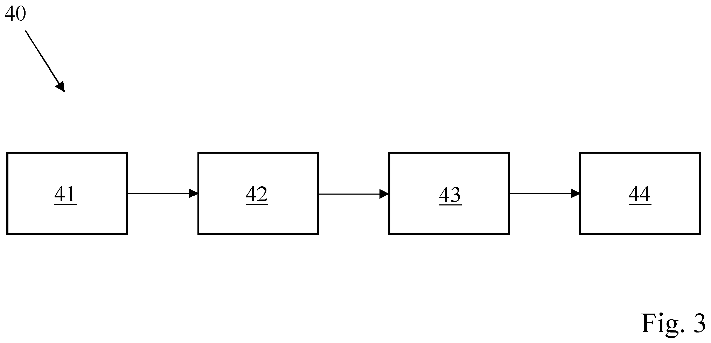

**Figur 3** fasst einige der Verfahrensschritte in einem Flussdiagramm 40 zusammen. Nach dem Vorsehen 41 des strukturmechanischen Modells 11 wird darin ein Partikel 30 platziert, dieses wird dann durch das Modell 11 bewegt 43. Dabei wird ein etwaiger Aufprall erfasst 44, bspw. wenn das Partikel 30 auf ein Schaufelblatt 25 trifft. Die Schritte 42-44 können dabei vielfach wiederholt werden, wobei sich durch Platzieren der Partikel 30.1-30.3 (siehe Figur 2b) an unterschiedlichen Stellen Aussagen zu Verteilungen treffen lassen, vergleiche die Beschreibungseinleitung im Detail.

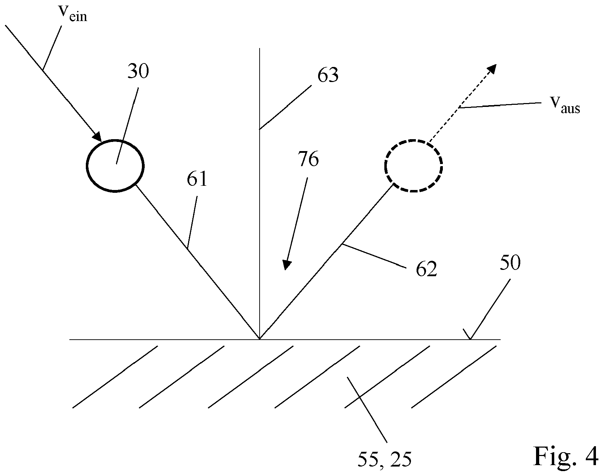

**Figur 4** illustriert schematisch, wie das Partikel 30 auf eine Oberfläche 50 eines Bauteils 55 trifft, bspw. eines Schaufelblatts 25. Das Partikel 30 fällt mit einem Geschwindigkeitsvektor vₑᵢₙ auf die Oberfläche 50, danach bewegt es sich mit einem Geschwindigkeitsvektor vₐᵤₛ weiter. Zu erkennen sind eine einfallende und eine ausfallende Bewegungstrajektorie 61, 62 des Partikels 30, sowie ein Lot 63. Der Aufprall 76 wird dabei quasi plastisch modelliert, der Richtungsvektor vₐᵤₛ ist dem Betrag kleiner als vₑᵢₙ. Ein entsprechender Faktor, um den der Betrag reduziert wird, kann in einer gesonderten strukturmechanischen Simulation ermittelt werden.

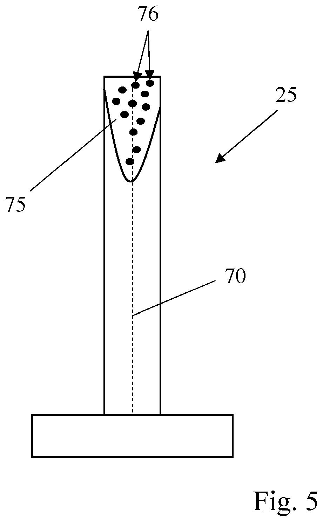

**Figur 5** zeigt in schematischer Darstellung ein Schaufelblatt 25, wobei der Blick auf dessen Vorderkante 70 fällt. In einer vorstehend geschilderten Weise wurden mit einer Vielzahl Partikel 30.1-30.3 Simulationen durchgeführt und wurde dabei ein Bereich 75 identifiziert, in dem eine hohe Anzahl an Aufprallen 76 vorliegt. Dieser Bereich 75 ist besonders partikeleinschlaggefährdet, und das Schaufelblatt 25 wird dort mit einer Schutzbeschichtung versehen.

**BEZUGSZEICHENLISTE**

| | | | |
|---|---|---|---|
| Flugtriebwerk 1 | | | |
| Verdichter | | | 2 |
| Brennkammer | | | 3 |
| Turbine | | | 4 |
| Längsachse | | | 5 |
| Gaskanal | | | 6 |
| | Abschnitt | | 6.1 |
| Modelle | | | 10, 11 |
| Axiale Richtung | | | 15 |
| Mehrere Gitter | | | 20 |
| | erstes Gitter | | 20.1 |
| | | Eintrittskante | 20.1.1 |
| | zweites Gitter | | 20.2 |
| | | Austrittskante | 20.1.2 |
| | drittes Gitter | | 20.3 |
| | viertes Gitter | | 20.4 |
| Schaufelblätter | | | 25 |
| Stromlinie | | | 28 |
| Partikel | | | 30, 30.1-30.3 |
| Flussdiagramm | | | 40 |
| Vorsehen | | | 41 |
| Verfahrensschritte | | | 42-44 |
| Oberfläche | | | 50 |
| Bauteils | | | 55 |
| Bewegungstrajektorie | | | 61, 62 |
| Lot | | | 63 |
| Vorderkante | | | 70 |
| Bereich | | | 75 |
| Aufprall | | | 76 |

## Patentansprüche

1. Computerimplementiertes Verfahren zum Simulieren von Partikeleinschlägen in einem Gaskanal (6) eines Flugtriebwerks (1),
umfassend die Schritte:
i) Vorsehen (41) eines strukturmechanischen Modells (11) von zumindest einem Abschnitt (6.1) des Gaskanals (6), wobei das Modell (11) strukturmechanisch modellierte Schaufelblätter (25) umfasst;
ii) Platzieren (42) eines Partikels (30) an einer Position in dem Gaskanal (6) des Modells (11);
iii) Bewegen (43) des Partikels (30) mit einem Geschwindigkeitsvektor v, welcher zuvor in einer CFD-Simulation in einem CFD-Modell (10) von zumindest einem Abschnitt (6.1) des Gaskanals (6) für ein den Gaskanal (6) durchströmendes Fluid ermittelt wurde;
iv) Erfassen (44) eines Aufpralls (76), wenn also das bewegte Partikel (30) auf ein Bauteil (55) des strukturmechanischen Modells (11) trifft.

2. Verfahren nach Anspruch 1, bei welchem sich das strukturmechanische Modell (11) axial über mindestens ein erstes und ein diesem nachgelagertes zweites Gitter (20.1, 20.2) erstreckt, wobei das Partikel (30) in Schritt iii) mit einem ersten Geschwindigkeitsvektor v₁ durch das erste Gitter (20.1) bewegt wird und ein erster resultierender Geschwindigkeitsvektor v_{1_res}, den das Partikel (30) eintrittsseitig des zweiten Gitters (20.2) hat, dort mit einem zweiten Geschwindigkeitsvektor v₂ aus der CFD-Simulation korrigiert wird.

3. Verfahren nach einem der vorstehenden Ansprüche, bei welchem, nachdem gemäß Schritt iv) der Aufprall (76) erfasst wird, das Partikel (30) mit einem geänderten Geschwindigkeitsvektor vₐᵤₛ und/oder mit einer geänderten Form weiterbewegt wird.

4. Verfahren nach Anspruch 3, bei welchem der Aufprall (76) quasiplastisch modelliert wird, nämlich mit dem Aufprall (76) eine als Betrag genommene Geschwindigkeit des Partikels (30) verringert wird.

5. Verfahren nach einem der vorstehenden Ansprüche, bei welchem, wenn gemäß Schritt iv) der Aufprall (76) erfasst wird, eine Auswirkung auf das Bauteil (55), insbesondere Schädigung des Bauteils (55), infolge des Aufpralls (76) bestimmt wird, und zwar unter Berücksichtigung von zumindest einem der folgenden Parameter: Aufprallwinkel, -geschwindigkeit, -energie, Bauteildicke, - spannung, -material, Partikelmaterial, -beschaffenheit, -größe, und -masse.

6. Verfahren nach einem der vorstehenden Ansprüche, bei welchem eine Vielzahl Partikel (30) gemäß den Schritten ii) bis iv) durch das strukturmechanische Modell (11) bewegt und eine Vielzahl Aufpralle (76) erfasst werden, wobei die Partikel (30.1-30.3) in Schritt ii) an unterschiedlichen Stellen des Gaskanals (6) platziert werden.

7. Verfahren zum Vorhersagen von Bauteilschäden durch den Aufprall von Partikeln, umfassend die Schritte:
- Reproduzieren eines Schadensbildes eines gebrauchten Bauteils aus einem ersten Flugtriebwerk derart, dass bei einem Verfahren nach Anspruch 6 die Partikelparameter, insbesondere Anzahl, Position und/oder Verteilung, solange variiert werden, bis die mit dem Verfahren bestimmte Auswirkung mit den Schäden am gebrauchten Bauteil im Wesentlichen übereinstimmt,
- Vorhersagen von Bauteilschäden in einem zweiten Flugtriebwerk, dessen Betriebsbedingungen und Geometrien sich von dem ersten Flugtriebwerk unterscheiden, auf Basis der Partikelparameter, der Betriebsbedingungen und Geometrien des zweiten Flugtriebwerks.

8. Verfahren nach Anspruch 7, wobei eine Größe und/oder Masse eines Partikels durch Auswertung von Schäden an dem gebrauchten Bauteil ermittelt wird, indem zunächst eine für einen Schaden zugehörige Energie ermittelt wird und für diese Energie eine zugehörige Größe und/oder Masse des Partikels ermittelt wird.

9. Verfahren zum Entwerfen eines Bauteils (55), insbesondere Schaufelblatts (25), für einen Gaskanal (6) eines Flugtriebwerks oder einer Bauteilanordnung mit einem Bauteil (55), bei welchem das Bauteil (55) als Teil eines strukturmechanischen Modells (11) von zumindest einem Abschnitt (6.1) des Gaskanals (6) modelliert wird und mit dem Modell (11) in einem Verfahren nach einem der vorstehenden Ansprüche Auswirkungen, insbesondere Schädigungen, von Partikeleinschlägen simuliert werden.

10. Verfahren nach Anspruch 9, bei welchem ein Bereich (75) des Bauteils (55), in dem eine aufprallverursachte Schädigung festgestellt wird, als Schwachstelle identifiziert wird, wobei in dem Bereich der Schwachstelle bevorzugt eine Gegenmaßnahme vorgenommen wird, die zumindest eines von einer strukturmechanischen Verstärkung, einer spannungsmechanischen Entlastung, einer Mikrostrukturoptimierung und einer Beschichtung umfasst.

11. Verfahren zum Herstellen eines Bauteils (55), insbesondere Schaufelblatts (25), für ein Flugtriebwerk (1), welches Bauteil (55) in einem Verfahren nach Anspruch 9 oder 10 entworfen wurde und/oder bei welchem, insbesondere lokal oder nur bereichsweise, eine Gegenmaßnahme ergriffen wurde, durch welche sich der betroffene Bereich der vormaligen Schwachstelle entsprechend der ergriffenen Gegenmaßnahme von der Umgebung unterscheidet.

12. Verfahren zum Warten eines Flugtriebwerks (1), umfassend ein Revidieren eines Bauteils (55), insbesondere Schaufel, das in einem Gaskanal (6) des Flugtriebwerks (1) bei dessen Betrieb genutzt wurde, wobei das Bauteil (55) basierend auf einer Betriebsdauer ausgetauscht, entnommen oder revidiert wird, wobei die Betriebsdauer aus einer Vorhersage nach einem Verfahren nach Anspruch 7 oder 8 abgeleitet ist.

13. Bestimmungsgemäßes Verwenden eines Bauteils (55), insbesondere Schaufel, mit einer maximalen Betriebsdauer, die aus einer Vorhersage nach einem Verfahren nach Anspruch 7 oder 8 abgeleitet ist.

14. Computerprogrammprodukt, umfassend Befehle, die bei einer Ausführung durch eine Rechnereinheit die Rechnereinheit veranlassen, ein Verfahren nach einem der Ansprüche 1 bis 8 auszuführen.

15. Bauteil (55), insbesondere Schaufel (25), entworfen mit einem Verfahren nach einem der Ansprüche 9 und 10 oder hergestellt in einem Verfahren nach Anspruch 11.
